# EUROPEAN PATENT APPLICATION

(11) **EP 1 440 951 A1**
(43) Date of publication of application: **28.07.2004**
(21) Application number: 02765483.9
(22) Date of filing: 11.09.2002
(51) Int. Cl.: C03C 6/02, C04B 18/16, B09B 3/00, C03B 20/00

(54) **METHOD FOR RECYCLING WASTE GLASS AND RECYCLED GLASS**

(30) Priority: 12.09.2001 JP 2001277147; 20.03.2002 JP 2002079735
(71) Applicant: Japan Science and Technology Agency, Kawaguchi-shi, Saitama 332-0012 (JP); National Institute of Advanced Industrial Science and Technology, Tokyo 100-8921 (JP)
(72) Inventor: AKAI, Tomoko c/o NATIONAL INSTITUTE OF ADVANCED, Ikeda-shi, Osaka 563-8577 (JP); CHEN, Danping, c/o NATIONAL INSTITUTE OF ADVANCED, Ikeda-shi, Osaka 563-8577 (JP); MASUI, Hirotsugu, Nara-shi, Nara 631-0013 (JP); KURAOKA, Kouji, c/o NATIONAL INSTITUTE OF ADVANCED, Ikeda-shi, Osaka 563-8577 (JP); YAZAWA, Tetsuo, Toyono-gun, Osaka 563-0105 (JP)
(74) Representative: Bentz, Jean-Paul
(86) International application number: PCT/JP2002/009268
(87) International publication number: WO 2003/024879

(57) **Abstract**

Waste glass is pulverized into pulverized waste glass, and the pulverized waste glass is brought into contact with acid solution so that components such as sodium other than silicon oxide in the fine particle waste glass are dissolved in the acid solution and removed. With this, it is possible to remove components other than silicon dioxide from waste glass. Therefore it is possible to recycle waste glass so as to reuse the waste glass as a useful regenerated product that can be used for various purposes.

## Description

### TECHNICAL FIELD

The present invention relates to a recycling method of waste glass for reusing the waste glass as cement aggregate or silicon oxide powder, for example, by removing components other than silicon oxide (SiO₂) from the waste glass; regenerated glass; and a method for manufacturing transparent glass from colored waste glass which now causes waste problems. More specifically, the present invention relates to a method for manufacturing transparent glass having high transmittance with respect to light in regions including an ultraviolet region by removing components such as a metallic coloring component from waste glass that contains the components such as the metallic coloring component; and transparent glass.

### BACKGROUND ART

Recently the shortage of the waste disposal sites has become a serious problem enough to become social problems. For this reason, regenerating and using waste as resources, namely recycling waste to save resources and to prevent environmental pollution, receives considerable attention.

Currently, only colorless and brown glass bottles are relatively recycled among glass collected after used as products (hereinafter referred to as commercial waste glass). Black and green glass bottles, car windshield, glass for cathode-ray tubes, glass for liquid crystal panels, glass building materials such as windowpane, and the like other than the colorless and brown bottles have come to be increasingly recycled, but are mostly discarded now. Further, among glass generated in the factory process of manufacturing glass (hereinafter referred to as factory waste glass), defective products and cut-off scrap are reused, but glass generated in the process of washing the furnace before melting glass having different color and composition is mostly discarded.

Since the shortage of waste disposal sites is a serious problem in recent years as explained earlier, collecting and reusing the commercial waste glass and factory waste glass (hereinafter described as waste glass if the commercial waste glass and the factory waste glass are not distinguished from each other) will become more important.

As a currently used method for recycling the waste glass, there is a method of reusing waste glass as cullet that is to be mixed in and remelted with glass material such as silica sand, soda ash, and limestone. In order to reuse the waste glass as cullet, however, the composition of the waste glass needs to be similar to the composition of the glass to be manufactured. Further, the cullet is generally used by 30 weight % through 70 weight % with respect to the glass material.

Therefore it is difficult to remelt and reuse all of the collected waste glass as cullet. Under these circumstances, expected is a recycling method of waste glass which can process large quantities of collected waste glass and can efficiently reuse the collected waste glass as resources.

Further, with the method of reusing waste glass as cullet, the waste glass is directly reused without being applied with chemical treatment. Thus, a component such as a metallic coloring component cannot be removed from the waste glass. Therefore, with this method, it is not possible to obtain transparent glass from waste glass containing a component such as a metallic coloring component.

Here, as a recycling method for processing waste glass, Tokukai 2000-160028 (published on June 13, 2000) discloses a method for manufacturing artificial marble from waste glass. Tokukai 2000-325917 (published on November 28, 2000) discloses a method for using waste glass as a substitute of feldspar by pulverizing and sintering the waste glass. Further, Tokukaihei 8-209615 (published on August 13, 1996) discloses a method for manufacturing glass cullet, in which waste glass (glass cullet) is used as light reflex material to be mixed into asphalt road material. Tokukai 2000-144745 (published on May 26, 2000) discloses an execution method of lightweight soil in which waste glass is used as foam glass. Tokukai 2000-191353 (published on July 11, 2000) discloses a manufacturing method of glass aggregate.

Further, as a method for collecting silicon oxide from waste glass, extended abstracts of the 2001 Annual Meeting of the Ceramics Society of Japan on page 143 discloses a method for collecting silicon oxide from waste glass such as industrial waste bottles by means of alkali fusion using sodium hydroxide.

### [PROBLEMS TO BE SOLVED BY THE INVENTION]

However, each of the recycling methods of waste glass described in the foregoing Publications is a method of applying physical treatment such as pulverization to waste glass, and then mixing the treated waste glass with a new component. In other words, waste glass is directly reused without subjected to chemical treatment. This may cause a problem that a component such as sodium in the waste glass exudes over time. Further, if the waste glass is colored color glass, metal contained as a coloring component that is blended for coloring purpose may exude.

In the execution method of lightweight soil which uses waste glass as foam glass as disclosed in Tokukai 2000-144745, for example, waste glass is reused as foam glass having a large surface area. Since the surface area thus increases, a component such as metal, which is contained in the foam glass, easily exudes. This may cause environmental damage. Note that, metal contained in glass may be coloring components such as chromium (green), cobalt (blue), selenium (yellow and red), nickel (brown and blue-violet), iron (black), and manganese (violet and red-violet), lead which is blended in optical materials, and the like. Further, other than toxic substances that have an adverse environmental effect, gold, silver, and cerium need to be collected if these metals are contained in glass, because gold and silver are expensive and cerium is precious as resources.

Further, the manufacturing method of cement aggregate as disclosed in Tokukai 2000-191353 has a problem of the exuding of sodium that is contained in large quantities in the cement aggregate. This exuding of sodium may cause an alkali silica reaction, which is a kind of alkali aggregate reaction and which causes cracking in cement concrete that contains the cement aggregate. As described above, the exuding of sodium causes the alkali silica reaction if waste glass is directly used as cement aggregate. For this reason, it is rare that waste glass is actually used as cement aggregate.

As explained above, the conventional recycling method which remelts waste glass as cullet has a problem that an amount of processable waste glass is limited. Further, since the recycling methods other than the remelting are methods of directly using waste glass, there is a problem that components such as sodium and metal in the waste glass may exude over time.

Further, the conventional recycling methods of waste glass are methods for newly manufacturing a product that contains waste glass by adding a new component to the waste glass. This also causes a problem that it is difficult to retrieve the waste glass from the recycled product and to recycle the retrieved waste glass again, namely, it is difficult to repeatedly recycle the waste glass.

As a method for preventing the alkali silica reaction, which is a problem caused by the exuding of a component in the waste glass over time as explained earlier, the extended abstracts of the 2001 Annual Meeting of the Ceramics Society of Japan on page 325 discloses a method for using a sol-gel method to apply surface coating to a surface of waste glass. With the surface coating using the sol-gel method, however, it is difficult to form a coating film uniformly on the surface of waste glass, and it is only possible to obtain a film having many pores (void). For this reason, the method for using the sol-gel method to apply the surface coating to the surface of waste glass is insufficient for preventing sodium, metal, etc., from exuding from the waste glass. The surface coating using the sol-gel method accordingly has a problem that the alkali silica reaction cannot be prevented. Further, since the sol-gel method needs to use an expensive metal, alkoxide, the required cost is not industrially realistic. In other words, in terms of cost, it is not realistic to industrially process large quantities of waste glass with this method.

Further, the method for collecting silicon dioxide from waste glass is a method in which waste glass is added with sodium hydroxide in an amount ten times as an amount of the waste glass and then heated to 500 °C. Since the strongly alkaline material is heated to 500 °C as described above, the process is hazardous, and requires higher cost because large quantities of sodium hydroxide is used. Therefore the method for collecting silicon oxide is unrealistic as industrial process.

Further, the treatment which dissolves in water all of the sodium that is contained in large quantities in waste glass is complicated. The processing also has a problem that it is difficult to handle silicon oxide that contains a large quantity of sodium component, because the silicon oxide containing a large quantity of sodium component easily gels. Further, there are also problems such that it is necessary to treat waste such as sodium hydroxide that is used in large quantities.

Namely, the method for collecting silicon oxide from waste glass is not realistic in terms of operability, safety, and cost, and also has a problem that it is necessary to treat waste generated in the process of the collecting method.

Under these circumstances, demanded is a recycling method of waste glass which can process and regenerate into glass, a large quantity of collected colored waste glass.

On the other hand, in accordance with the recent development of optical communication technique and information processing technique, transparent glass such as quartz glass in various types other than high-purity quartz glass for optical fiber has been increasingly demanded. However, since the conventional manufacturing method is a method for manufacturing the high-purity quartz glass for optical fiber, it is not possible to manufacture transparent glass at low cost. Therefore expected is a method for manufacturing transparent glass in large quantities and at low cost.

As a method for manufacturing quartz glass, known is a method for producing Vycor quartz glass (Vycor method), which acidizes and then sinters borosilicate glass to obtain quartz glass.

The Vycor method, however, is a method for obtaining quarts glass by manufacturing borosilicate glass from a new material, and then acidizing and sintering the borosilicate glass. Namely, the Vycor method is not a method for recycling waste glass. Further, glass manufactured by this method does not transmit light having a wavelength of not more than 200 nm, in other words, does not exhibit transmission with respect to light in regions where light has a wavelength of not more than 200 nm.

With the Vycor method, glass is relatively easily sintered if the glass composed of three components Na₂O, B₂O₃, and SiO₂ (borosilicate glass) is used. If the Vycor method is applied to waste glass containing a coloring component, calcium oxide, and the like, however, it is not possible to obtain transparent glass because crack (breaking) occurs in the sintering due to the coloring component, calcium oxide, and the like, which are contained in the waste glass.

Further, as a method for manufacturing high-purity silica which is a material for quartz glass, known are (1) a method in which minute particles of amorphous silica and minute particles of crystalline silica are mixed and then sintered (Tokukaihei 5-163013, published on June 29, 1993), (2) a method in which hydrated silica gel is acidized and then baked (Tokukaihei 11-11929, published on January 19, 1999; and Tokukaihei 11-11931, published on January 19, 1999), (3) a method in which slag or slag derivative is reacted with sulfuric acid so as to generate plaster, the deposited plaster is subjected to solid-liquid separation, an acid concentration in the separated liquid is increased so as to deposit amorphous silica, and the amorphous silica is washed using acid and purified water (Tokukaihei 11-116233, published on April 27, 1999), and other methods.

However, these manufacturing methods are methods for obtaining silica (SiO₂) fine particle which is a material for quartz glass, and are not methods for obtaining transparent quartz glass. Accordingly, remelting is required after the sintering in order to obtain quartz glass if these manufacturing methods are used, and transparent quartz glass in a solid state cannot be obtained directly after the sintering. Therefore these manufacturing methods are not convenient methods for obtaining transparent glass.

Further, these manufacturing methods are not methods for recycling waste glass. Further, it is not possible to obtain transparent glass if these manufacturing methods are applied to colored waste glass, because it is not possible to remove components such as a metallic coloring component.

In order to solve the foregoing problems, the present invention relates to a recycling method of waste glass for recycling waste glass by removing components such as sodium and metal other than silicon oxide. For example, the present invention has an objective to provide a recycling method of waste glass which can recycle waste glass as cement aggregate that does not allow components in the waste glass to exude over time, high-purity silicon oxide that can be used for many purposes, and other material; a regenerated product such as cement aggregate and silicon oxide, which is regenerated by the recycling method; and regenerated glass.

Further, the present invention also has an objective to provide a manufacturing method of transparent glass which can recycle waste glass that contains components such as a metallic coloring component, and which can manufacture transparent glass at low cost and conveniently; and transparent glass.

### DISCLOSURE OF INVENTION

A recycling method of waste glass of the present invention is arranged so as to include a pulverizing step of pulverizing waste glass into pulverized waste glass; and an acidizing step of bringing the pulverized waste glass into contact with acid solution by immersing the pulverized waste glass in the acid solution.

With this invention, it is possible to remove mainly sodium among components other than silicon oxide (non-silicon oxide components) that are contained in the waste glass. Therefore, as cement aggregate and building block material, for example, it is possible to reuse in large quantities, a regenerated product of waste glass which is obtained by acidizing the pulverized waste glass.

In other words, in a regenerated product obtained by the recycling method of waste glass of the present invention, sodium contained in the waste glass is desorbed from the waste glass in the acidizing step by being exchanged with protons in the acid solution. With this, sodium contained in the waste glass is removed, so that a regenerated product containing no sodium or having a small content of sodium is obtained.

Accordingly, if the foregoing regenerated product is reused as cement aggregate, for example, sodium in the cement aggregate does not exude over time after the cement concrete is hardened. This can prevent an alkali silica reaction and resultant cracking in the cement concrete, which occur with the lapse of time.

Therefore it is possible to reuse waste glass in large quantities as a substitute for sand to be used in cement aggregate, for example. With this, as a regenerated product obtained by acidizing waste glass, it is possible to reuse in large quantities, the waste glass which is currently discarded in large quantities.

The recycling method of waste glass of the present invention is preferably arranged so that each of grains of the pulverized waste glass has a diameter of not more than 100 µm, and more preferably in a range of not more than 70 µm.

With this, an area that the pulverized waste glass is in contact with the acid solution is large. Therefore it is possible to efficiently cause non-sodium components such as sodium and metal to move into the acid solution and to more surely desorb from the pulverized waste glass in the acidizing step.

In order to solve the foregoing problems, a recycling method of waste glass of the present invention is arranged so as to include a boron oxide-containing waste glass melting step of heating and melting boron oxide-containing waste glass which contains (A) boron oxide material to be melted into boron oxide and (B) waste glass; a pulverizing step of solidifying and pulverizing into pulverized waste glass, the boron oxide-containing waste glass that is melted in the boron oxide-containing waste glass melting step; and an acidizing step of bringing the pulverized waste glass into contact with acid solution.

With this invention, metal, etc., which is blended for coloring or other purposes can be removed from the waste glass in a case where the waste glass is color glass or optical glass used as an optical material.

In other words, in the boron oxide-containing waste glass melting step, by heating, melting, cooling, and, if necessary, heat-treating the waste glass that contains boron oxide material to be melted into boron oxide, it is possible to separate the boron oxide-containing waste glass into a silicon oxide phase and a boron oxide phase. Here, metal (coloring component of color glass), lead (contained in an optical material), sodium, calcium, and the like, in the boron oxide-containing waste glass are dissolved and concentrated in the boron oxide.

The boron oxide-containing waste glass in which the non-sodium oxide components are concentrated in the boron oxide is thus obtained. This boron oxide-containing waste glass is then solidified and pulverized in the pulverizing step into pulverized waste glass containing boron oxide. Then the pulverized waste glass is brought into contact with acid solution in the acidizing step. With this, the boron oxide containing the non-silicon oxide components is removed from the pulverized waste glass containing boron oxide. Since boron oxide easily dissolves in acid solution, the boron oxide can be dissolved in the acid solution in the acidizing step. Here, the metal, lead, sodium, calcium, etc., in the boron oxide are also dissolved in the acid solution.

Therefore it is possible to remove the non-silicon oxide components such as metal from the waste glass that contains a color glass and/or an optical glass which are currently mostly discarded. With this, it is possible to gather silicon oxide (silica component) from the waste glass, namely, it is possible to obtain silicon oxide as a regenerated product recycled from waste glass. Therefore it becomes possible to reuse the silicon oxide extracted from waste glass, as a high value-added regenerated product which can be variously used as glass material, ceramic material, quartz glass material, and the like.

As described above, silicon oxide is extracted from waste glass and reused as silicon oxide that can be used for various purposes. With this, when glass manufactured as a regenerated product (regenerated glass) becomes waste glass after use, it is possible to extract silicon oxide from the waste glass again. Accordingly, unlike in the recycling method for reusing waste glass by mixing additional components with the waste glass, it is possible to easily reuse a regenerated product again, namely, it is possible to repeatedly recycle a regenerated product. Note that, it is also possible to collect and reuse the metal, etc., that is dissolved in the acid solution in the acidizing step.

In order to solve the foregoing problems, a recycling method of waste glass of the present invention is arranged so as to include a phosphorus oxide-containing waste glass melting step of heating and melting phosphorus oxide-containing waste glass which contains (A) phosphorus oxide material to be melted into phosphorus oxide and (B) waste glass; a pulverizing step of solidifying and pulverizing into pulverized waste glass, the phosphorus oxide-containing waste glass that is melted in the phosphorus oxide-containing waste glass melting step; and an acidizing step of bringing the pulverized waste glass into contact with acid solution.

With this invention, metal, etc., which is blended for coloring or other purposes can be removed from the waste glass, in a case where the waste glass is made of a color glass and/or an optical glass used as an optical material.

In other words, in the phosphorus oxide-containing waste glass melting step, by heating and melting the waste glass containing phosphorus oxide material to be melted into phosphorus oxide, it is possible to separate the phosphorus oxide-containing waste glass into a silicon oxide phase and a phosphorus oxide phase. Here, metal (coloring component of color glass), lead (contained in an optical material), sodium, calcium, and the like, in the phosphorus oxide-containing waste glass are dissolved and concentrated in the phosphorus oxide.

The non-sodium oxide components are thus concentrated in the phosphorus oxide in the phosphorus oxide-containing waste glass. This phosphorus oxide-containing waste glass is then pulverized in the pulverizing step into pulverized waste glass. Then the pulverized waste glass containing phosphorus oxide is brought into contact with acid solution in the acidizing step. With this, the phosphorus oxide containing the non-silicon oxide components is removed from the pulverized waste glass containing phosphorus oxide. Since phosphorus oxide easily dissolves in acid solution, the phosphorus oxide can be dissolved in the acid solution in the acidizing step. Here, the metal, lead, sodium, calcium, etc., in the phosphorus oxide are also dissolved in the acid solution.

Note that, the phosphorus oxide contained in the pulverized waste glass is easily dissolved in water, and the solution which dissolves the phosphorus oxide becomes phosphoric acid solution. For this reason, by treating the pulverized waste glass using water instead of the acid solution, it is also possible to remove from the pulverized waste glass containing phosphorus oxide, the phosphorus oxide containing non-silicon oxide components. In other words, the pulverized waste glass may be brought into contact with water in the acidizing step.

Therefore it is possible to remove the non-silicon oxide components such as metal from the waste glass that contains a color glass and/or an optical glass which are currently mostly discarded. With this, it is possible to gather silicon oxide (silica component) from the waste glass, namely, it is possible to obtain silicon oxide as a regenerated product recycled from waste glass. Therefore it becomes possible to reuse the silicon oxide extracted from waste glass, as a high value-added regenerated product which can be variously used as glass material, ceramic material, quartz glass material, and the like.

As described above, silicon oxide is extracted from waste glass and reused as silicon oxide that can be used for various purposes. With this, when glass manufactured as a regenerated product (regenerated glass) becomes waste glass after use, it is possible to extract silicon oxide from the waste glass again. Accordingly, unlike in the recycling method for reusing waste glass by mixing additional components with the waste glass, it is possible to easily reuse a regenerated product again, namely, it is possible to repeatedly recycle a regenerated product. Note that, it is also possible to collect and reuse the metal, etc., that is dissolved in the acid solution in the acidizing step.

In the recycling method of waste glass of the present invention, a temperature of the acid solution in the acidizing step is not particularly limited, but preferably in a range of not less than 50°C, and more preferably in a range of not less than 70°C. Further, a temperature of the acid solution in the acidizing step is not particularly limited, but preferably in a range of not more than 200°C, and more preferably in a range of not more than 100°C.

In the recycling method of waste glass of the present invention, a concentration of the acid solution in the acidizing step is preferably in a range of not less than 0.1 normal and not more than 4 normal.

With this, it is possible to more surely remove from the pulverized waste glass in the acidizing step, the non-silicon oxide components such as sodium and metal.

Further, a regenerated glass of the present invention and a cement aggregate of the present invention are manufactured by the foregoing recycling method of waste glass.

Since it is possible to remove sodium from the waste glass with the foregoing recycling method of waste glass as explained earlier, it is possible to provide regenerated glass containing no sodium, and cement aggregate which does not generate an alkali silica reaction caused by the exuding of sodium.

Further, with the foregoing recycling method of waste glass, it is possible to manufacture from waste glass, regenerated glass (high-purity silica) containing not less than 99 weight % of silica. The thus manufactured regenerated glass (high-purity silica) contains boron and/or phosphorus as a slight amount of impurities. The boron and/or phosphorus are produced as results from the boron oxide material in the boron oxide-containing waste glass melting step or the phosphorus oxide material in the phosphorus oxide-containing waste glass melting step. Specifically, the regenerated glass contains not less than 10 ppm of boron or phosphorus. Here, the concentration of boron or phosphorus contained in the regenerated glass is a value obtained by determining using inductively coupled plasma, the quantity of boron or phosphorus in a solution prepared by resolving the regenerated glass with hydrogen fluoride.

Regenerated glass (high-purity silica) manufactured from waste glass using the foregoing recycling method of waste glass is characterized by having a large surface area, specifically a surface area of not less than 10m²/g. Here, the surface area of the regenerated glass is a value obtained by measurement using a nitrogen absorption device.

In order to solve the foregoing problems, a manufacturing method of transparent glass of the present invention, which is a recycling method of waste glass, is arranged so as to include a melting step of heating and melting waste glass together with boron oxide material to be melted into boron oxide, silicon oxide, and sodium oxide material to be melted into sodium oxide; a solidifying step of solidifying into glass, a melted matter obtained in the melting step; an acidizing step of bringing the glass that is obtained in the solidifying step into contact with acid solution; and a baking step of baking the glass that is acidized in the acidizing step.

With this invention, it is possible to remove a coloring component from waste glass containing components such as a metallic coloring component, thereby achieving transparent quartz glass.

Namely, by heating and melting waste glass that contains components such as a metallic coloring component together with boron oxide material, silicon oxide, and sodium oxide material in the melting step; and solidifying the melted matter into glass in the solidifying step, it is possible to separate the glass into a silicon oxide phase and a phase of boron oxide and sodium oxide (hereinafter referred to as boron oxide-sodium oxide phase). With this, the components such as a metallic coloring component can be dissolved in boron oxide and sodium oxide, and then concentrated in the boron oxide-sodium oxide phase. In this manner, the components such as a metallic coloring component are concentrated in the boron oxide-sodium oxide phase of the glass during the solidifying step.

Then, the glass that is separated into phases is brought into contact with the acid solution in the acidizing step. Since boron oxide and sodium oxide are easily dissolved in acid solution, the boron oxide and the sodium oxide are dissolved in the acid solution in the acidizing step. Here, the components such as a metallic coloring component in the boron oxide-sodium oxide phase are also dissolved in the acid solution. With this, it is possible to remove from the glass, the components such as a metallic coloring component.

Further, many pores are formed in the glass in the acidizing step because the boron oxide-sodium oxide phase is removed. The many pores disappear when baked in the baking step, so that transparent glass is obtained.

Therefore it is possible to remove from waste glass that contains components such as a metallic coloring component, the components such as a metallic coloring component, so as to obtain transparent glass mostly composed of only silicon oxide. With this, it is possible to manufacture transparent glass from inexpensively available waste glass that contains components such as a metallic coloring component, thereby manufacturing transparent glass at low cost.

Further, with this method, by directly acidizing the glass obtained in the solidifying step, and then baking the acidized glass without remelting the acidized glass, it is possible to obtain transparent glass. Accordingly, with this method, heating treatment at a temperature more than 1200°C (about 1600°C, for example) required for remelting is not required after the acidizing, and heating treatment at a comparatively low temperature, namely at not more than 1200°C, is only required. Therefore, with this method, it is possible to manufacture transparent glass conveniently.

Further, if general waste glass containing calcium oxide (such as waste colored soda-lime-type glass, for example) is baked after acidized, the calcium oxide contained in the waste glass may remain in the glass after the acidizing, and causes cracking in the glass when baked. With this, transparent glass cannot be obtained.

With this method, in contrast, the waste glass is heated and melted together with boron oxide material, silicon oxide, and sodium oxide material before the acidizing. With this, even if the waste glass containing calcium oxide is used, a concentration of the calcium oxide in the glass to be acidized can be reduced. Therefore a concentration of the calcium oxide remaining in the glass after the acidizing is sufficiently reduced. As a result, it is possible to prevent the glass from being cracked in the baking, thereby obtaining transparent glass.

Note that, compared with the recycling method of waste glass as explained earlier, the manufacturing method of transparent glass of the present invention has advantages as explained below. The recycling method of waste glass is a method for pulverizing and using as fine particles, glass obtained by solidifying a melted matter containing waste glass and boron oxide, and is not a method for directly obtaining transparent glass. In contrast, the manufacturing method of transparent glass of the present invention is a method for directly obtaining transparent glass from the glass obtained by solidifying a melted matter.

Further, the recycling method of waste glass as explained earlier is so arranged that only boron oxide is added to a melted matter of waste glass. With the method of the present invention, in contrast, not only boron oxide but also silicon oxide and sodium oxide are added to a melted matter of waste glass so as to reduce a concentration of calcium oxide in the glass after remelting. This prevents cracking in the baking after the acidizing.

The manufacturing method of transparent glass of the present invention is preferably arranged so as to include a heat treatment step of heat-treating the glass after the solidifying step.

With this method, the phase separation into the silicon oxide phase and the boron oxide-sodium oxide phase further proceeds. Therefore the components such as a metallic coloring component can be more efficiently concentrated in the sodium oxide-boron oxide phase. As a result, it is possible to more efficiently remove the components such as a metallic coloring component from the glass in the acidizing step. Therefore it is possible to obtain transparent glass having higher purity and higher light transmittance.

Further, transparent glass manufactured from waste glass by the foregoing manufacturing method of transparent glass contains as a slight amount of impurities, boron that results from the boron oxide material in the melting step. Specifically, the transparent glass contains not less than 10 ppm of boron. Here, the concentration of boron contained in the transparent glass is a value obtained by determining using inductively coupled plasma, the quantity of boron in a solution prepared by resolving the regenerated glass with hydrogen fluoride.

Note that, the "transparent glass" in the present specification refers to glass that exhibits not less than 40% of transmittance with respect to light having a wavelength of 300 nm when the thickness of the glass is 1 mm.

For a fuller understanding of the nature and advantages of the invention, reference should be made to the ensuing detailed description taken in conjunction with the accompanying drawings.

### BRIEF DESCRIPTION OF DRAWINGS

Figure 1(a) is a schematic diagram used for explaining an acidizing step in a recycling method of waste glass and a manufacturing method of transparent glass in accordance with the present invention, the diagram showing how waste glass is separated into phases.
Figure 1(b) is a schematic diagram used for explaining an acidizing step in a recycling method of waste glass and a manufacturing method of transparent glass in accordance with the present invention, the diagram showing the waste glass from which components other than silicon oxide are removed by acidizing.
Figure 2(a) is a diagram showing results of X-ray diffraction measurement of concrete in Example 3.
Figure 2(b) is a diagram showing results of X-ray diffraction measurement in Comparative Example 1.
Figure 2(c) is a diagram showing results of X-ray diffraction measurement in Comparative Example 2.
Figure 3 is a graph showing light absorption spectrums of green colored waste glass of Example 7, a glass plate obtained by mixing and melting various components with the green colored waste glass, and a transparent glass plate obtained by baking the melted matter after acidizing.
Figure 4(a) is a diagram showing how transparency of glass changes before and after treatment of the present invention. Figure 4(a) shows green colored waste glass of Example 7 before the treatment.
Figure 4(b) is a diagram showing how transparency of glass changes before and after treatment of the present invention. Figure 4(b) shows green colored waste glass of Example 7 after the treatment.
Figure 5 is a graph showing a light absorption spectrum of a transparent glass plate of Example 8. The transparent glass plate is obtained by mixing and melting various components with the green colored waste glass.

### BEST MODE FOR CARRYING OUT THE INVENTION

### [RECYCLING METHOD OF WASTE GLASS]

The following will explain an embodiment of a recycling method of waste glass of the present invention. The recycling method of the present embodiment is arranged so as to include (i) a pulverizing step of pulverizing waste glass into pulverized waste glass, and (ii) an acidizing step of bringing the pulverized waste glass into contact with the acid solution so as to treat using acid solution, the pulverized waste glass obtained in the pulverizing step.

The waste glass refers to glass collected after used as products (hereinafter referred to as commercial waste glass) and glass generated in the factory process of manufacturing glass (hereinafter referred to as factory waste glass).

The commercial waste glass may be glass bottles such as colorless, brown, black, and green glass bottles; glass for cars such as car windshields and car window glass; glass for electric appliances such as glass for cathode-ray tubes and glass for liquid crystal panels; glass for building materials such as windowpane, and the like. Further, the factory waste glass may be glass generated as defective products and cut-off scrap, glass generated in the process of washing the furnace before melting glass having different color and composition, and the like.

Among the above-described waste glass, the recycling method of waste glass of the present embodiment can be properly used as a recycling method of glass including colored glass bottles such as black and green glass bottles, glass for cars, glass for electric appliances, glass for building materials, and glass generated in the process of washing the furnace before melting glass having different color and composition, which are mostly discarded now.

A method for pulverizing the waste glass in the pulverizing step is not particularly limited, and may be a pulverizing method using a commercially available industrial mill, for example. But it is preferable to use a method such as mechanical milling, which can obtain waste glass whose grains have small diameters. With this, a contact area where the pulverized waste glass is in contact with the acid solution that is used in the later acidizing step increases. In addition, stress applied for pulverizing the waste glass breaks the glass structure of the waste glass. This increases a rate of non-silicon oxide components in the waste glass that exude into the acid solution in the later acidizing step, namely, an exuding rate of non-silicon oxide components. Therefore it is possible to efficiently remove non-silicon oxide components from the waste glass. In other words, by increasing the surface area of the pulverized waste glass, the non-silicon oxide components such as sodium can move from the inside to the outside of the glass more easily.

A shape of the pulverized waste glass is not particularly limited, but the grain diameter of the pulverized waste glass is preferably not more than 100 µm, more preferably not more than 70 µm, further preferably not more than 38 µm, and most preferably not more than 6 µm. By limiting the grain diameter of the pulverized waste glass within the above-described ranges, it is possible to easily remove mainly sodium from the waste glass in the later acidizing step.

The acid solution used in the acidizing step may be, but not particularly limited to, aqueous solution of nitric acid, sulfuric acid, and hydrochloric acid, for example. Among the above-mentioned acids, nitric acid is preferable. Nitric acid does not contain chlorine and sulfur. Hence, by using nitric acid solution as the acid solution in the acidizing step, it is possible to surely prevent metal corrosion caused by chlorine or sulfur from occurring on metal building material or other material in contact with cement concrete, in a case where a regenerated product obtained by the recycling method of waste glass is used as cement aggregate, for example.

An acid concentration of the acid solution is not particularly limited, but preferably in a range of not less than 0.1 normal and not more than 4 normal, and more preferably in a range of not less than 1 normal and not more than 3 normal. By using the acid solution whose concentration is within the above-described ranges, it is possible to more surely remove non-silicon oxide components such as sodium from the pulverized waste glass.

A temperature and processing time for the acidizing step may be determined depending on the type, amount, and grain diameter of the pulverized waste glass, the type and concentration of the acid solution, and the like. But the temperature of the acid solution and pulverized waste glass is preferably in a range of not less than 20 °C and not more than 400 °C, more preferably in a range of not less than 70 °C and not more than 200 °C, and further preferably in a range of not less than 90 °C and not more than 140 °C. Note that, the temperature for the acidizing step is most preferably in a range of not less than 90 °C and not more than 100 °C because a pressure vessel is not required when the temperature for the acidizing step is not more than 100 °C. Further, a processing time for the acidizing step is preferably in a range of not less than 8 hours and not more than 72 hours, and more preferably in a range of not less than 12 hours and not more than 48 hours.

A ratio of the pulverized waste glass to the acid solution in the acidizing step is not particularly limited, but the ratio of the pulverized waste glass to the acid solution is preferably in a range of from 1 : 500 to 2 : 5 by weight, and more preferably in a range of from 1 : 200 to 1 : 5 by weight.

Further, a method for bringing the pulverized waste glass into contact with the acid solution in the acidizing step is not particularly limited. For example, the method for bringing the pulverized waste glass into contact with the acid solution may be such that the waste glass is immersed in the acid solution and then stirred; the waste glass and the acid solution are placed in an airtight container and then heated; or the like.

According to the recycling method of waste glass of the present embodiment, it is possible to dissolve non-silicon oxide components in the acid solution so as to remove the non-silicon oxide components, specifically, mainly sodium, by bringing the pulverized waste glass obtained in the pulverizing step into contact with the acid solution in the acidizing step.

Therefore a regenerated product obtained by the recycling method of waste glass of the present embodiment can be appropriately used as cement aggregate that does not cause an alkali silica reaction, because the regenerated product is free from a problem of the exuding of sodium component over time.

The recycling method of waste glass of the present embodiment may further include before the pulverizing step, a boron oxide-containing waste glass melting step of heating and melting boron oxide-containing waste glass composed of waste glass and boron oxide material that is to be melted into boron oxide (B₂O₃). Here, the boron oxide material refers to a material that is melted into boron oxide in the boron oxide-containing waste glass melting step, and may be boric acid (H₃BO₃), for example.

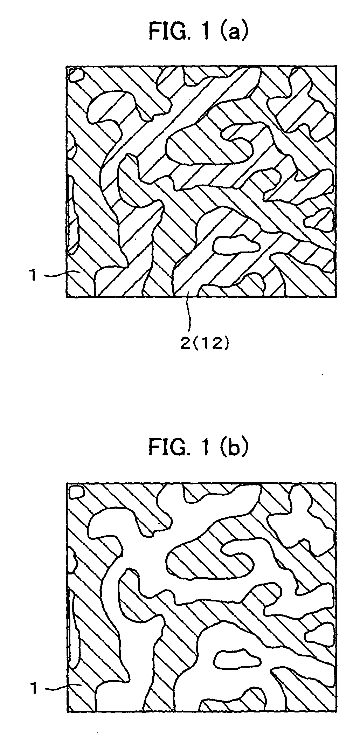

Soda-lime-type glass (Na₂O-CaO-SiO₂-Al₂O₃) is generally used as bottle glass, window glass, plate glass, and the like. When added with the boron oxide material and melted, the soda-lime-type glass is separated into a silicon oxide phase 1 (SiO₂ phase) and a boron oxide phase 2 (B₂O₃ phase) as shown in Figure 1(a), and non-silicon oxide components dissolve in the boron oxide phase 2. Namely, chromium (green), cobalt (blue), selenium (yellow and red), nickel (blue-violet and brown), iron (black), and other coloring components which are contained if the waste glass is color glass; and lead, etc., which is contained if the waste glass is an optical material can be dissolved in the boron oxide phase 2. In other words, non-silicon oxide components in the waste glass can be concentrated in the boron oxide phase 2 in the boron oxide-containing waste glass melting step. The boron oxide-containing waste glass is vitrified into a transparent glass state when cooled and solidified after the melting. Here, very minute phase separation into the silicon oxide phase 1 and the boron oxide phase 2 proceeds. Then, the melted boron oxide-containing waste glass is solidified, and then pulverized into pulverized waste glass containing boron oxide.

The boron oxide in the pulverized waste glass containing boron oxide is easily dissolved by acid solution, and thus dissolved together with non-silicon oxide components in the acid solution in the acidizing step as explained earlier. With this, it is possible to remove from the waste glass, non-silicon oxide components such as sodium, calcium, and a metal element, which are contained in the waste glass. In other words, the boron oxide phase 2 containing non-silicon oxide components can be removed from the silicon oxide phase 1 as shown in Figure 1(b). Further, it is also possible to reuse the non-silicon oxide components that are dissolved in the acid solution in the acidizing step. Note that, the acidizing step of the pulverized waste glass containing boron oxide can be carried out in a manner similar to the acidizing step as explained earlier.

Further, an amount of the boron oxide material in the boron oxide-containing waste glass is not particularly limited. But a placing amount of the boron oxide material with respect to 100 parts by weight of the waste glass is preferably in a range of not less than 10 parts by weight and not more than 50 parts by weight, and more preferably in a range of not less than 25 parts by weight and not more than 45 parts by weight, in terms of corresponding amounts of boron oxide to be melted from the boron oxide material. By limiting the placing amount of the boron oxide material within the above-described ranges, the non-silicon oxide components in the waste glass can be efficiently concentrated in the boron oxide phase 2 in the boron oxide-containing waste glass melting step, and then removed from the waste glass in the acidizing step. By placing the boron oxide material in an amount not less than 10 parts by weight with respect to 100 parts by weight of the waste glass, it is possible to sufficiently separate the silicon oxide phase 1 from the boron oxide phase 2 in the boron oxide-containing waste glass melting step. By placing the boron oxide material in an amount not more than 50 parts by weight with respect to 100 parts by weight of the waste glass, it is possible to prevent an amount of the boron oxide in the acid solution to be processed after the acidizing step from becoming too much.

A method for melting the boron oxide material and the waste glass in the boron oxide-containing waste glass melting step is not particularly limited as long as the boron oxide material and the waste glass can be evenly melted by the method. For example, the method may be such that the boron oxide material and the waste glass are mixed together and then the mixture is heated and melted. Alternatively, the method may be such that the waste glass is heated and melted first, and then the boron oxide material is added to the melted waste glass.

A melting temperature in the boron oxide-containing waste glass melting step may be appropriately set in accordance with the type and amount of the non-silicon oxide components in the waste glass, the processing time, and the like. But the melting temperature in the boron oxide-containing waste glass melting step is preferably in a range of not less than 1100 °C and not more than 1450 °C, more preferably in a range of not less than 1250 °C and not more than 1350 °C, and further preferably in a range of not less than 1300 °C and not more than 1350 °C. By limiting the melting temperature within the above-described ranges, the non-silicon oxide components in the waste glass can be efficiently concentrated in the boron oxide phase 2, and then surely removed from the waste glass in the later acidizing step.

Further, a melting time for the boron oxide-containing waste glass melting step may be appropriately set in accordance with the type and amount of the non-silicon oxide components in the waste glass, the melting temperature, and the like. But the melting time for the boron oxide-containing waste glass melting step is preferably in a range of not less than 30 minutes and not more than 4 hours, and more preferably in a range of not less than 2 hours and not more than 3 hours.

Further, heat treatment may be further applied to the melted matter of the boron oxide-containing waste glass which is cooled after the boron oxide-containing waste glass melting step. With this heat treatment, the non-silicon oxide components can be further efficiently concentrated in the boron oxide phase 2 in some cases. In these cases, it is possible to more efficiently remove non-silicon oxide components from the pulverized waste glass containing boron oxide in the later acidizing step.

A temperature for the heat treatment is preferably in a range of not less than 600 °C and not more than 750 °C, and more preferably in a range of not less than 630 °C and not more than 650 °C. By limiting the temperature for the heat treatment within the above-described ranges, the non-silicon oxide components can be efficiently concentrated in the boron oxide phase 2, and then surely removed in the later acidizing step. With this, it is possible to improve the deposition ratio of the non-silicon oxide components.

Further, a time for the heat treatment in the boron oxide-containing waste glass heat treatment step may be appropriately set in accordance with the type and amount of the non-silicon oxide components in the waste glass, the melting temperature, and the like. But the time for the heat treatment in the boron oxide-containing waste glass heat treatment step is preferably not more than 100 hours, and more preferably not less than 24 hours and not more than 70 hours. If the time for the heat treatment is more than 100 hours, the phase separation further proceeds so as to further crystalize the silicon oxide and the other components. This may lower a desorption ratio of the non-silicon oxide components in the later acidizing step.

The recycling method of waste glass of the present embodiment may further include before the pulverizing step, a phosphorus oxide-containing waste glass melting step of heating and melting phosphorus oxide-containing waste glass composed of waste glass and phosphorus oxide material that is to be melted into phosphorus oxide. Here, the phosphorus oxide material is a material to be melted into phosphorus oxide in the phosphorus oxide-containing waste glass melting step, and may be ammonium phosphate (NH₄H₂PO₄), for example. Note that, the phosphorus oxide may be phosphorus pentoxide (P₂O₅), for example.

Soda-lime-type glass (Na₂O-CaO-SiO₂-Al₂O₃) is generally used as bottle glass, window glass, plate glass, and the like. When added with the phosphorus oxide material and melted, the soda-lime-type glass is separated into a silicon oxide phase 1 and a phosphorus oxide phase 12 as shown in Figure 1, and non-silicon oxide components dissolve in the phosphorus oxide phase 12. Namely, chromium (green), cobalt (blue), selenium (yellow and red), nickel (blue-violet and brown), iron (black), and other coloring components which are contained if the waste glass is color glass; and lead, etc., which is contained if the waste glass is composed of an optical material can be dissolved in the phosphorus oxide phase 12. In other words, non-silicon oxide components in the waste glass can be concentrated in the phosphorus oxide phase 12 in the phosphorus oxide-containing waste glass melting step. When cooled and solidified after the melting, the phosphorus oxide-containing waste glass is either vitrified into a transparent glass state or separated into the phases and then crystallized, so as to be assimilated into devitrified glass. Here, very minute phase separation into the silicon oxide phase 1 and the phosphorus oxide phase 12 proceeds. Then, the melted phosphorus oxide-containing waste glass is solidified, and then pulverized into pulverized waste glass containing boron oxide.

The phosphorus oxide in the pulverized waste glass containing phosphorus oxide is easily dissolved by acid solution or water, and can be dissolved together with non-silicon oxide components in either the acid solution or water in the acidizing step as explained earlier. With this, it is possible to remove from the waste glass, non-silicon oxide components including sodium, calcium, a metal element such as a coloring component, aluminum, and the like, which are contained in the waste glass. Phosphorus oxide is easily dissolved in water, and generates phosphoric acid when dissolved in acid solution, so that water can be used instead of the acid solution in the acidizing step. Further, it is also possible to reuse the non-silicon oxide components that are dissolved in the acid solution or water in the acidizing step. Note that, the acidizing step of the pulverized waste glass containing phosphorus oxide can be carried out in a manner similar to the acidizing step as explained earlier.

Further, an amount of the phosphorus oxide material in the phosphorus oxide-containing waste glass with respect to 100 parts by weight of the waste glass is preferably in a range of not less than 90 parts by weight and not more than 200 parts by weight, more preferably in a range of not less than 100 parts and not more than 150 parts by weight, and further preferably in a range of not less than 95 parts and not more than 110 parts by weight, in terms of corresponding amounts of phosphorus oxide to be melted from the phosphorus oxide material. By limiting the placing amount of the phosphorus oxide material within the above-described ranges, the non-silicon oxide components in the waste glass can be efficiently concentrated in the phosphorus oxide phase 12 in the phosphorus oxide-containing waste glass melting step, and then removed from the waste glass in the acidizing step.

By placing the phosphorus oxide material in an amount not less than 100 parts by weight with respect to 100 parts by weight of the waste glass, heating the phosphorus oxide-containing waste glass can cause the phosphorus oxide-containing waste glass to be melted into a melted matter and then to be vitrified and separated into the phases. Then, by acidizing the phosphorus oxide-containing waste glass that is separated into the phases, it is possible to remove components contained in the phosphorus oxide 12. Note that, if the phosphorus oxide material is placed in an amount not more than 90 parts by weight, the phosphorus oxide-containing waste glass is crystallized within a solid state without melted into the melted matter. Even if the phosphorus oxide-containing waste glass is crystallized within a solid state in this manner, however, phosphorus oxide crystal that is dissolvable in acid solution or water is selectively generated by heat-treating the phosphorus oxide-containing waste glass at 1300°C through 1500°C so as to proceed the crystallization of the phosphorus oxide-containing waste glass. Accordingly, alkalis such as sodium and calcium, and metal, which are dissolved in the phosphorus oxide, can be selectively removed in the later acidizing step, so that powder mainly containing silicon oxide (regenerated glass) can be obtained as a regenerated product.

A method for melting the phosphorus oxide material and the waste glass in the phosphorus oxide-containing waste glass melting step is not particularly limited as long as the phosphorus oxide material and the waste glass can be evenly melted by the method. For example, the method may be such that the phosphorus oxide material and the waste glass are mixed together and then the mixture is heated and melted. Alternatively, the method may be such that the waste glass is heated and melted first, and then the phosphorus oxide material is added to the melted waste glass.

A melting temperature in the phosphorus oxide-containing waste glass melting step may be appropriately set in accordance with the type and amount of the non-silicon oxide components in the waste glass, the processing time, and the like. But the melting temperature in the phosphorus oxide-containing waste glass melting step is preferably in a range of not less than 1000 °C and not more than 1650 °C, and more preferably in a range of not less than 1300 °C and not more than 1600 °C. By limiting the melting temperature within the above-described ranges, the non-silicon oxide components in the waste glass can be efficiently concentrated in the phosphorus oxide phase 12, and then surely removed from the waste glass in the later acidizing step.

Further, a melting time for the phosphorus oxide-containing waste glass melting step may be appropriately set in accordance with the type and amount of the non-silicon oxide components in the waste glass, the melting temperature, and the like. But the melting time for the phosphorus oxide-containing waste glass melting step is preferably in a range of not less than 30 minutes and not more than 5 hours, and more preferably in a range of not less than 2 hours and not more than 3 hours.

The recycling method of waste glass of the present embodiment may further include an autoclaving step of autoclaving the pulverized waste glass. By autoclaving the pulverized waste glass, it is possible to cause non-silicon oxide components in the pulverized waste glass to more easily dissolve in the acid solution in the acidizing step, thereby efficiently removing the non-silicon oxide components from the pulverized waste glass.

The conditions for the autoclaving step are not particularly limited, and may be set in accordance with the type, grain diameter, etc., of the pulverized waste glass. But the temperature for the autoclaving is preferably in a range of not less than 100 °C and not more than 900 °C, more preferably in a range of not less than 300 °C and not more than 700 °C, and further preferably in a range of not less than 450 °C and not more than 600 °C. Further, a time for the autoclave step is preferably in a range of not less than one hour and not more than 48 hours, and more preferably in a range of not less than 6 hours and not more than 12 hours. Namely, the conditions for the autoclaving is most preferably arranged such that the temperature is in a range of not less than 450 °C and not more than 600 °C and the time is in a range of not less than 6 hours and not more than 12 hours.

Further, the recycling method of waste glass of the present embodiment may further include between the pulverizing step and the acidizing step, a classifying step of classifying the pulverized waste glass so as to obtain from the pulverized waste glass obtained in the pulverizing step, pulverized waste glass whose grains have desired diameters. With the classifying step, diameters of grains of the pulverized waste glass can be made uniform. With this, the acidizing step can be performed using a condition optimum for the grain diameter of the pulverized waste glass.

Further, the recycling method of waste glass of the present embodiment may be arranged so that granulating treatment, alkali-proof treatment, etc., may be further performed on the regenerated glass obtained by acidizing the pulverized waste glass.

Cement aggregate of the present invention is manufactured in the recycling method of waste glass of the present embodiment as explained above. Since sodium can be removed from waste glass by the recycling method of waste glass as explained above, it is possible to provide high-quality cement aggregate that does not cause an alkali silica reaction due to the exuding of sodium therefrom.

### [EXAMPLES AND COMPARATIVE EXAMPLES]

With reference to Examples and Comparative Examples, the following will explain the present invention in more detail, but the present invention is not limited to Examples and Comparative Examples described below. Note that, in Examples and Comparative Examples, "parts" refers to "parts by weight", and "%" refers to "weight %."

In Examples and Comparative Examples, the quantities of elements that are contained in measurement samples such as a waste glass, pulverized waste glass, and regenerated product were determined in the following manner.

Among elements contained in a solution, the quantity of sodium was determined using atomic absorption analysis, and the quantities of elements other than sodium were determined using inductively coupled plasma (ICP). Further, the quantities of elements contained in a glass or regenerated product were determined by applying the atomic absorption analysis and ICP to a solution that was obtained by dissolving the measurement sample in water. The quantities of silicon and boron were determined using the ICP with respect to the measurement sample which was resolved by sodium peroxide (N₂O₂), dissolved in water, and subjected to pH adjustment. The quantities of potassium, aluminum, calcium, and cobalt were determined using the ICP with respect to the measurement sample which was melted by borax, dissolved in water, and subjected to pH adjustment. The quantity of sodium was determined using the ICP with respect to the measurement sample which was resolved by hydrogen fluoride and sulfuric acid, heated to remove the hydrogen fluoride, and subjected to pH adjustment.

### [EXAMPLE 1]

Soda-lime glass (15.3Na₂O - 10.2CaO - 73.2SiO₂ - 1.3Al₂O₃) as waste glass was crushed and pulverized, and the pulverized soda-lime glass was then grinded into pulverized waste glass using a mortar and pestle. The pulverized waste glass was classified so that pulverized waste glass whose grain diameter is not more than 38 µm was obtained.

(A) One part of the thus obtained soda-lime glass whose grain diameter is not more than 38 µm, as the pulverized waste glass, and (B) 200 parts of 3 normal nitric acid solution, as the acid solution, were placed in an airtight container, heated to 140°C, acidized for 48 hours at 140°C, and then washed in water so as to be deacidified. Note that, in Example 1 and in Examples and Comparative Examples described below, a container made of polytetrafluoroethylene resin equipped with a metal shield (Teflon (registered trademark) container) was used as the airtight container.

Measurement revealed that a sodium content of the soda-lime glass obtained by the acidizing as described above (regenerated product, regenerated glass) was 26 % with respect to the sodium content of the soda-lime glass before the acidizing. In other words, by acidizing waste glass in the above-described manner after pulverizing the waste glass, it was possible to desorb 74% of sodium contained in the waste glass. Table 1 shows the results.

### [EXAMPLE 2]

The soda-lime glass of Example 1 as waste glass was crushed and pulverized, and then pulverized using a planetary ball mill (brand name: P-7; manufactured by Fritsch) into pulverized waste glass whose grain diameter is not more than 6 µm.

(A) One part of the thus obtained soda-lime glass whose grain diameter is not more than 6 µm, as the pulverized waste glass, and (B) 25 parts of 1 normal nitric acid solution, as the acid solution, were placed in the airtight container, heated to 90°C, acidized for 10 hours at 90°C, and then washed in water so as to be deacidified.

Measurement revealed that a sodium content of the acidized soda-lime glass obtained as described above (regenerated product, regenerated glass) was 8.4 % with respect to the sodium content of the soda-lime glass before the acidizing. In other words, by acidizing waste glass in the above-described manner after pulverizing the waste glass, it was possible to desorb 91.6% of sodium contained in the waste glass. Table 1 shows the results.

### [EXAMPLE 3]

(A) One part of soda-lime glass whose grain diameter is not more than 38 µm, which is obtained in a manner similar to the method in Example 1, and (B) five parts of 3 normal nitric acid solution were placed in the airtight container, and then heated for 48 hours at 120°C so as to be acidized. As a result, 44% of sodium contained in the soda-lime glass before the heating was desorbed. In other words, the above-described treatment removed 44% of sodium contained in the pulverized waste glass. Then, 60 parts of the acidized soda-lime glass obtained by the above-described treatment (regenerated product, regenerated glass) and 40 parts of cement (ordinary portland cement; manufactured by Sumitomo Osaka Cement, Co., Ltd.) were mixed so as to prepare a cement mixture. 1000 parts of high-performance concrete water reducing agent (brand name: Mighty 150; manufactured by Kao Corporation) and 10 parts of purified water were mixed so as to prepare a high-performance concrete water reducing agent liquid. Then, 30 parts of the high-performance concrete water reducing agent liquid was added to 100 parts of the cement mixture, and sufficiently kneaded to prepare a concrete.

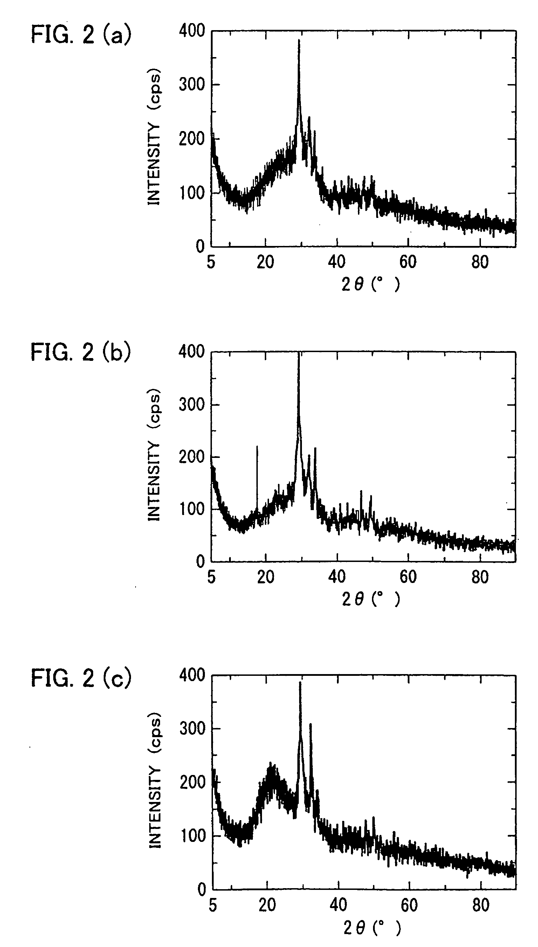

The thus prepared concrete was molded to have a cylindrical shape using a cylinder made of vinyl chloride so as to obtain a concrete molded body. The concreted molded body was cured for 24 hours in a thermostatic chamber whose temperature is 60°C. The concrete molded body was then heat-treated for 24 hours at 120°C using an autoclave device. The heat-treated concrete molded body was pulverized using a hammer and then measured using an X-ray diffraction method. Figure 2(a) shows results of the measurement.

### [COMPARATIVE EXAMPLE 1]

Except that the soda-lime glass whose grain diameter is not more than 38 µm before the acidizing in Example 3 was used instead of the acidized soda-lime glass in Example 3, the concrete molded body was manufactured, cured, and heat-treated in a manner similar to the method in Example 3. The heat-treated concrete molded body was pulverized using a hammer and then measured using the X-ray diffraction method. Figure 2(b) shows results of the measurement.

### [COMPARATIVE EXAMPLE 2]

Except that quartz glass whose grain diameter is not more than 38 µm having no sodium content is used instead of the acidized soda-lime glass in Example 3, the concrete molded body was manufactured, cured, and heat-treated in a manner similar to the method in Example 3. The heat-treated concrete molded body was pulverized using a hammer and then measured using the X-ray diffraction method. Figure 2(c) shows results of the measurement.

As shown in Figure 2(a), the X-ray diffraction measurement results of the concrete in Example 3 which is prepared by mixing the acidized soda-lime glass with cement has an X-ray diffraction pattern similar to that of the X-ray diffraction measurement results shown in Figure 2(b) regarding the concrete which is prepared by mixing cement with quartz glass having no sodium content. In contrast, the X-ray diffraction measurement results of the concrete in Comparative Example 1 which is prepared by mixing cement with the soda-lime glass before the acidizing, as shown in Figure 2(b), has a peak in the vicinity of 2θ = 18°, and differs from the measurement results of the concrete as shown in Figure 2(c).

This revealed that, by using the acidized soda-lime glass as cement aggregate, it is possible to prevent reactions involving sodium such as an alkali silica reaction (alkali aggregate reaction) which problematically occurs if the soda-lime glass that is not acidized is used as the cement aggregate. Namely, the regenerated product obtained by acidizing pulverized waste glass is appropriately used as cement aggregate.

### [EXAMPLE 4]

A mixture of (A) 100 parts of blue colored soda-lime glass containing 0.1% cobalt oxide as a coloring component, as the waste glass, and (B) 54 parts of boric acid (H₃BO₃) (to be melted into 30 parts of boron oxide (B₂O₃) when melted together with the soda-lime glass) was melted under a temperature of 1400°C. The mixture was cooled and solidified, and then pulverized into pulverized waste glass.

One part of the pulverized waste glass as described above and 25 parts of 1 normal nitric acid solution as the acid solution were placed in the airtight container, heated to 90°C, acidized for 24 hours at 90°C, and then washed in water so as to be deacidified.

Measurement of elements contained in the thus obtained acidized pulverized waste glass (regenerated glass) as a regenerated product confirmed that most of elements other than sodium and aluminum did not exist, namely, the acidizing removed the components other than aluminum.

An exuding rate of each element was obtained in accordance with an amount of the element exuded into the 1 normal nitric acid solution after the acidizing, and an amount of the element contained in the acidized blue colored soda-lime glass. In other words, in accordance with the measurement results of each element, the exuding rate with respect to each element was obtained using an expression, exuding rate (%) = (amount (weight) of the element in the 1 normal nitric acid solution / amount (weight) of the element in the blue colored soda-lime glass) × 100. The obtained exuding rates are shown in Table 2. Further, Table 3 shows elemental analysis results of the acidized pulverized waste glass (regenerated glass).

### [EXAMPLE 5]

Except that blue colored soda-lime glass containing 0.1% cobalt oxide as a coloring agent was used instead of the soda-lime glass as waste glass, the pulverized waste glass whose grain diameter is not more than 6 µm was obtained in a manner similar to the method in Example 2.

The pulverized waste glass whose grain diameter is not more than 6 µm was acidized under a condition similar to the condition in Example 4, and the quantity of each element that is exuded into the 1 normal nitric acid solution used in the acidizing was determined. This revealed that even if the blue colored soda-lime glass is used as the waste glass, it is possible to remove sodium from waste glass as in a case where the waste glass does not contain a coloring component.

An amount of each element that is exuded into the 1 normal nitric acid solution is measured. Then, an exuding rate with respect to each element that is contained in the blue colored soda-lime glass was obtained using an expression, exuding rate (%) = (amount (weight) of the element in the 1 normal nitric acid solution / amount (weight) of the element in the blue colored soda-lime glass) × 100. The obtained exuding rates are shown in Table 2.

**[TABLE 1]**

| | EXAMPLE 1 | EXAMPLE 2 |
|---|---|---|
| GRAIN DIAMETER (µm) | NOT MORE THAN 38 | NOT MORE THAN 6 |
| ACID SOLUTION | 3N NITRIC ACID | 1N NITRIC ACID |
| TEMPERATURE (°C) | 140 | 90 |
| ACIDIZING TIME (HOURS) | 48 | 24 |
| SODIUM DESORPTION RATIO (%) | 74 | 91.6 |

Results shown in Table 1 indicate that sodium that is contained in the waste glass before the acidizing is desorbed from the regenerated product that is obtained by acidizing the pulverized waste glass which is obtained in the pulverizing step. This reveals that sodium is removed from pulverized waste glass by acidizing the pulverized waste glass.

**[TABLE 2]**

| | EXAMPLE 4 | EXAMPLE 5 |
|---|---|---|
| SODIUM | 99.4 | 71.2 |
| CALCIUM | 100 | 23.6 |
| COBALT | 100 | 14.9 |
| BORON | 96.6 | - |
| ALUMINUM | 19.1 | 5.2 |
| SILICON | 0.9 | 0.74 |
| UNIT: % | | |

**[TABLE 3]**

| | EXAMPLE 4 |
|---|---|
| SODIUM | <0.01 |
| CALCIUM | <0.01 |
| COBALT | 0.001 |
| BORON | 0.032 |
| ALUMINUM | 0.74 |
| SILICON | 37.2 |
| UNIT: WEIGHT % | |

Results shown in Tables 2 and 3 indicate that, by performing a melting step of adding boron oxide to colored waste glass and melting the colored waste glass, and then pulverizing and acidizing the colored waste glass, it is possible to remove not only sodium, but also calcium and cobalt that is contained as a coloring component in the colored waste glass.

### [EXAMPLE 6]

A mixture of (A) 100 parts of green colored soda-lime glass containing 0.1% chromium oxide Cr₂O₃ as a coloring component, as the waste glass, and (B) 81 parts of boric acid (H₃BO₃) (to be melted into 45 parts of boron oxide (B₂O₃) when melted together with the soda-lime glass) was melted under a temperature of 1400°C. The mixture was rapidly cooled, and then pulverized into pulverized waste glass.

One part of the pulverized waste glass as described above and 25 parts of 1 normal nitric acid solution as the acid solution were placed in the airtight container, heated to 90°C, acidized for 24 hours at 90°C, and then dried for 24 hours at 150°C. The acidized waste glass and 25 parts of 3 normal nitric acid solution were placed in the airtight container, acidized for 24 hours at 90°C, and then washed in water to eliminate the nitric acid.

Table 4 shows elemental analysis results of the thus obtained acidized pulverized waste glass (regenerated glass) as a regenerated product.

**[TABLE 4]**

| | EXAMPLE 6 |
|---|---|
| SODIUM | 0.01 |
| CALCIUM | 0.003 |
| BORON | 0.008 |
| ALUMINUM | 0.12 |
| CHROMIUM | 0.003 |
| UNIT: WEIGHT % | |

Results shown in Table 4 indicate that, by performing a melting step of adding boron oxide to colored waste glass and melting the colored waste glass, and then pulverizing and acidizing the colored waste glass, it is possible to remove not only sodium, but also calcium and chromium that is contained as a coloring component in the colored waste glass.

As described above, a recycling method of waste glass of the present invention is arranged so as to include a pulverizing step of pulverizing waste glass into pulverized waste glass; and an acidizing step of bringing the pulverized waste glass into contact with acid solution.

With this, it is possible to remove from the waste glass, non-silicon oxide components such as sodium. Therefore, as cement aggregate, for example, it is possible to reuse in large quantities, a regenerated product obtained by acidizing the pulverized waste glass.

As described above, a recycling method of waste glass of the present invention is arranged so as to include a boron oxide-containing waste glass melting step of heating and melting (A) boron oxide material and (B) boron oxide-containing waste glass which contains waste glass.

With this, metal, etc., can be removed from the waste glass in the acidizing step if the waste glass is color glass or optical glass. Therefore it is possible to extract and reuse silicon oxide from the waste glass.

As described above, a recycling method of waste glass of the present invention is arranged so as to include a phosphorus oxide-containing waste glass melting step of heating and melting (A) phosphorus oxide material and (B) phosphorus oxide-containing waste glass which contains waste glass.

With this, metal, etc., can be removed from the waste glass in the acidizing step if the waste glass is color glass or optical glass. Therefore it is possible to extract and reuse silicon oxide from the waste glass.

As described above, a cement aggregate of the present invention is manufactured by the foregoing recycling method of waste glass.

Therefore it is possible to provide cement aggregate which does not generate an alkali silica reaction caused by the exuding of sodium.

### [MANUFACTURING METHOD OF TRANSPARENT GLASS]

The following will explain an embodiment of a method for manufacturing transparent glass from waste glass in accordance with the present invention. The manufacturing method of transparent glass using waste glass in accordance with the present embodiment is arranged so as to include a melting step of heating and melting waste glass together with boron oxide material that is to be melted into boron oxide, silicon oxide, and sodium oxide material that is to be melted into sodium oxide; a solidifying step of solidifying into glass, a melted matter that is obtained in the melting step; an acidizing step of bringing the glass that is obtained in the solidifying step into contact with acid solution; and a baking step of baking the glass that is acidized in the acidizing step.

The waste glass refers to glass collected after used as products (hereinafter referred to as commercial waste glass) and glass generated in the factory process of manufacturing glass (hereinafter referred to as factory waste glass). With the manufacturing method of transparent glass in accordance with the present embodiment, it is also possible to remove metal as a coloring component from the waste glass having components such as a metallic coloring component. With this, it is possible to manufacture transparent glass from waste glass containing a coloring component.

The commercial waste glass may be glass bottles such as brown, black, and green glass bottles; glass for cars such as car windshields and car window glass; glass for electric appliances such as glass for cathode-ray tubes and glass for liquid crystal panels; glass for building materials such as windowpane, and the like. Further, the factory waste glass may be glass generated as defective products and cut-off scrap, glass generated in the process of washing the furnace before melting glass having different color and composition, and the like.

Among the above-described waste glass, the method for manufacturing transparent glass of the present invention can be properly used as a recycling method of waste such as waste glass containing a metallic coloring component (hereinafter referred to as colored waste glass when appropriate); and, in particular, waste including colored glass bottles such as black and green glass bottles, colored glass for cars, colored glass for electric appliances, colored glass for building materials, and colored glass generated in the process of washing the furnace before melting glass having different color and composition, which are mostly discarded now.

The colored waste glass is arranged by adding a metallic coloring component to colorless glass.

The colorless glass is either composed of only silicon dioxide (SiO₂) or composed of mainly silicon dioxide together with other components. The other components that can be contained in the colorless glass may be sodium oxide (Na₂O), potassium oxide (K₂O), calcium oxide (CaO), magnesium oxide (MgO), barium oxide (BaO), lead oxide (PbO), boron oxide (B₂O₃), aluminum oxide (Al₂O₃), and the like. A typical example of glass containing non-silicon oxide components is soda-lime-type glass (Na₂O-CaO-SiO₂-Al₂O₃) which is generally used as bottle glass, window glass, plate glass, and the like.

The metallic coloring component may be chromium (such as Cr³⁺) which is a green component, cobalt (such as Co²⁺) which is a blue component, selenium which is a yellow or red component, nickel which is a brown or blue-violet component, iron (such as Fe²⁺) which is a black component, manganese which is a violet or red-violet component, and the like.

With the method for manufacturing transparent glass of the present invention, it is possible to obtain transparent glass having no crack and no devitrification even if the colored waste glass containing calcium oxide (CaO) is used. Therefore the method for manufacturing transparent glass of the present invention is particularly effective as a recycling method of colored waste glass containing calcium oxide. The colored waste glass containing calcium oxide may be colored soda-lime-type glass (soda-lime-type glass to which a metallic coloring component is added).

Further, with the method for manufacturing transparent glass of the present invention, it is possible to obtain transparent glass from which components such as metal (such as lead) other than a coloring component is removed, even if waste glass containing the components such as metal other than a coloring component is used. Therefore the method for manufacturing transparent glass of the present invention is also effective as a recycling method of waste glass containing the components such as metal other than a coloring component.

The boron oxide material used in the melting step should be a material to be melted into boron oxide in the melting step. The boron oxide material may be boric acid (H₃BO₃), and boron oxide, for example.

Further, a placing amount of the boron oxide material is not particularly limited. But the placing amount of the boron oxide material with respect to 100 parts by weight of the colored waste glass is preferably in a range of not less than 40 parts by weight and not more than 200 parts by weight, and more preferably in a range of not less than 70 parts by weight and not more than 120 parts by weight, in terms of corresponding amounts of boron oxide to be melted from the boron oxide material. By limiting the placing amount of the boron oxide material within the above-described ranges, the components such as the metallic coloring component in the colored waste glass can be efficiently concentrated in the sodium oxide-boron oxide phase 2 in the melting step, and then removed from the colored waste glass in the acidizing step. By placing the boron oxide material in an amount not less than 40 parts by weight with respect to 100 parts by weight of the colored waste glass, it is possible to sufficiently separate the silicon dioxide phase 1 from the sodium oxide-boron oxide phase 2 in the melting step. By placing the boron oxide material in an amount not more than 200 parts by weight with respect to 100 parts by weight of the colored waste glass, it is possible to prevent an amount the boron oxide in the acid solution to be processed after the acidizing step from becoming too much.

The silicon oxide used in the melting step should be melted into silicon dioxide (SiO₂) in the melting step, and may be either silicon monoxide (SiO) or silicon dioxide (SiO₂). Further, the silicon dioxide may be in any state including a crystallized state (quarts, crystal, tridymite, cristobalite, etc.), an amorphous state (synthetic silica powder, quartz glass, etc.), and a hydrated gel state (silica gel). The silicon oxide is melted more easily if a grain diameter of the silicon oxide is smaller, but if the grain diameter is too small, the silicon oxide may generate bubbles which consequently lower the transmittance of the resultant transparent glass. Accordingly, powdered silicon oxide whose average grain diameter is 500 µm to 1 mm is appropriately used.

Further, a placing amount of the silicon oxide is not particularly limited. But the placing amount of the silicon oxide with respect to 100 parts by weight of the colored waste glass is preferably in a range of not less than 30 parts by weight and not more than 150 parts by weight, and more preferably in a range of not less than 50 parts by weight and not more than 100 parts by weight, in terms of corresponding amounts of silicon oxide (SiO₂) to be melted from the silicon oxide. By placing the silicon oxide in an amount not less than 30 parts by weight with respect to 100 parts by weight of the colored waste glass, it is possible to sufficiently reduce a concentration of calcium oxide in glass to be obtained in the later solidifying step. This more surely prevents glass from being cracked and devitrified in the baking. Further, by placing the silicon oxide in an amount not more than 150 parts by weight with respect to 100 parts by weight of colored waste glass, it is possible to prevent an increase in the manufacturing cost.

The sodium oxide material used in the melting step should be melted into sodium oxide in the melting step. The sodium oxide material may be sodium carbonate (Na₂CO₃), hydrocarbon sodium (NaHCO₃), and sodium oxide, for example.

Further, a placing amount of the sodium oxide material is not particularly limited. But the placing amount of the sodium oxide material with respect to 100 parts by weight of the colored waste glass is preferably in a range of not less than 4 parts by weight and not more than 20 parts by weight, and more preferably in a range of not less than 7 parts by weight and not more than 12 parts by weight, in terms of corresponding amounts of sodium oxide to be melted from the sodium oxide material. By limiting the placing amount of the silicon oxide material within the above-described ranges, the components such as the metallic coloring component in the colored waste glass can be efficiently concentrated in the sodium oxide-boron oxide phase 2 in the melting step, and then removed from the colored waste glass in the acidizing step. By placing the silicon oxide material in an amount not less than 4 parts by weight with respect to 100 parts by weight of the colored waste glass, it is possible to sufficiently separate the silicon dioxide phase 1 from the sodium oxide-boron oxide phase 2 in the melting step. By placing the silicon oxide material in an amount not more than 20 parts by weight with respect to 100 parts by weight of the colored waste glass, it is possible to prevent an amount of the sodium oxide in the acid solution to be processed after the acidizing step from becoming too much.

A method for heating and melting the waste glass together with the boron oxide material to be melted into boron oxide, the silicon oxide, and the sodium oxide material to be melted into sodium oxide in the melting step is not particularly limited as long as the components are evenly melted by the method. For example, the method may be such that the components are mixed together and then the mixture is heated and melted. Alternatively, the method may be such that the colored waste glass is heated and melted first, and then the other components are added to the melted colored waste glass.

In addition to the boron oxide material, the silicon oxide, and the sodium oxide material, other materials such as aluminum oxide material, for example, may be heated and melted together with the colored waste glass in the melting step. If the colored waste glass containing aluminum oxide, such as colored soda-lime-type glass, is used, it is preferable in the melting step that the colored waste glass is heated and melted together with the boron oxide material, the silicon oxide, the sodium oxide material, and the aluminum oxide material. This can further prevent cracking in the baking step.

The aluminum oxide material is a material that is to be melted into aluminum oxide (Al₂O₃) in the melting step. The aluminum oxide material may be aluminum oxide (Al₂O₃) and aluminum hydroxide (Al(OH)₃), for example.

Further, a placing amount of the aluminum oxide material is not particularly limited. But the placing amount of the aluminum oxide material with respect to 100 parts by weight of the colored waste glass is preferably in a range of not less than 2 parts by weight and not more than 10 parts by weight, and more preferably in a range of not less than 4 parts by weight and not more than 8 parts by weight, in terms of corresponding amounts of aluminum oxide to be melted from the aluminum oxide material. By placing the aluminum oxide material in an amount not less than 2 parts by weight with respect to 100 parts by weight of the colored waste glass, it is possible to further prevent cracking in the baking step. By placing the aluminum oxide material in an amount not more than 10 parts by weight with respect to 100 parts by weight of the colored waste glass, it is possible to prevent an increase in a melting temperature in the melting step.

The melting temperature in the melting step may be appropriately set in accordance with the type and amount of the non-silicon oxide components in the colored waste glass, the processing time, and the like. But the melting temperature in the melting step is preferably in a range of not less than 1250 °C and not more than 1600 °C, and more preferably in a range of not less than 1350 °C and not more than 1450 °C. By limiting the melting temperature within the above-described ranges, the components such as the metallic coloring component in the colored waste glass can be efficiently concentrated in the boron oxide phase 2, and then surely removed from the colored waste glass in the later acidizing step.

Further, a melting time for the melting step may be appropriately set in accordance with the type and amount of the non-silicon oxide components in the colored waste glass, the melting temperature, and the like. But the melting time for the melting step is preferably in a range of not less than 30 minutes and not more than 5 hours, and more preferably in a range of not less than 3 hours and not more than 4 hours.

In this manner, the colored waste glass is heated and melted together with the boron oxide material, silicon oxide, and sodium oxide material. As a result, the obtained melted matter is separated into the silicon dioxide phase 1 (SiO₂ phase) and the sodium oxide-boron oxide phase 2 (Na₂O-B₂O₃ phase) as shown in Figure 1(a), and components other than silicon oxide, sodium oxide, and boron oxide (hereinafter referred to as the other components) dissolve in the sodium oxide-boron oxide phase 2. Namely, the components such as the metallic coloring component, and, in particular, components such as the metallic coloring component, calcium oxide, and aluminum oxide, for example, which are contained if the colored waste glass is colored soda-lime-type glass, can be dissolved in the sodium oxide-boron oxide phase 2. In other words, the components such as the metallic coloring component, calcium oxide, and aluminum oxide in the waste glass can be concentrated in the sodium oxide-boron oxide phase 2 in the melting step.

When the obtained melted matter is cooled and solidified in the solidifying step after the melting step, the melted matter is vitrified (solidified) in cake, so that glass is obtained. Here, very minute phase separation into the silicon dioxide phase 1 and the sodium oxide-boron oxide phase 2 proceeds. These two phases are very minutely separated from each other, and a typical width of each phase is several tens Å.

In the acidizing step, the glass obtained in the solidifying step is acidized while the shape of the glass is mostly retained. The sodium oxide and boron oxide in the glass is easily dissolved by the acid solution. Accordingly, the sodium oxide and the boron oxide are dissolved together with the other components in the acid solution in the acidizing step. With this, it is possible to remove from the glass, the components such as the metallic coloring component, calcium oxide, and aluminum oxide, which are contained in the waste glass. In other words, the sodium oxide-boron oxide phase 2 can be removed from the silicon dioxide phase 1 as shown in Figure 1(b).

The acid solution used in the acidizing step may be, but not particularly limited to, aqueous solution of nitric acid, sulfuric acid, and hydrochloric acid, for example.

An acid concentration of the acid solution is not particularly limited, but preferably in a range of not less than 0.1 normal and not more than 4 normal, and more preferably in a range of not less than 0.5 normal and not more than 1.0 normal. By using the acid solution whose concentration is within the above-described ranges, it is possible to more surely remove the components such as the metallic coloring component from the glass. Therefore it is possible to obtain transparent glass having higher purity and higher light transmittance.

A temperature and processing time for the acidizing step may be determined depending on the type, amount, and grain diameter of the colored waste glass, the type and concentration of the acid solution, and the like. But the temperature of the acid solution and the glass is preferably in a range of not less than 20 °C and not more than 400 °C, more preferably in a range of not less than 70 °C and not more than 200 °C, and further preferably in a range of not less than 90 °C and not more than 140 °C. Note that, the temperature for the acidizing step is most preferably in a range of not less than 90 °C and not more than 100 °C because a pressure vessel is not required when the temperature for the acidizing step is not more than 100 °C. Further, the processing time for the acidizing step is preferably in a range of not less than 8 hours and not more than 72 hours, and more preferably in a range of not less than 12 hours and not more than 48 hours.

A ratio of the glass to the acid solution in the acidizing step is not particularly limited, but the ratio of the glass to the acid solution is preferably in a range of from 1 : 500 to 2 : 5 by weight, and more preferably in a range of from 1 : 200 to 1 : 5 by weight.

The acidizing (treatment for bringing the glass into contact with the acid solution) may be performed once, but more preferably performed in a plurality of times by replacing the acid solution. With this, it is possible to more surely remove the components such as the metallic coloring component from the glass without using a large quantity of the acid solution, thereby reducing an amount of the metallic coloring component, etc., remaining in the transparent glass. Therefore it is possible to obtain transparent glass having higher purity and higher light transmittance at low cost. The amount of the metallic coloring component, etc., remaining in the transparent glass can be more reduced if the acidizing is repeated more times. However, the operation becomes complicated if the acidizing is repeated too many times. Accordingly, it is preferable that the acidizing is repeated not more than three times.

Further, a method for bringing the glass into contact with the acid solution in the acidizing step is not particularly limited. For example, the method for bringing the glass into contact with the acid solution may be such that the glass is immersed in the acid solution and then stirred, the colored waste glass and the acid solution are placed in an airtight container and then heated, or the like.

By bringing the glass into contact with the acid solution in the acidizing step, the sodium oxide-boron oxide phase 2 is removed from the glass, and the original shape of the silicon dioxide phase 1 is retained. This achieves porous glass in which the silicon dioxide phase 1 is a framework and pores are formed where the sodium oxide-boron oxide phase 2 has been removed.

Baking the porous glass in the baking step causes the pores to disappear, so that the whole glass shrinks and becomes transparent. Here, if the glass to be baked has a large amount of remaining calcium oxide, the glass may be in danger of being cracked and devitrified (losing the transparency of the glass). In the method of the present embodiment, however, the concentration of the calcium oxide in the glass to be acidized is kept down by using the silicon oxide and sodium oxide material in the melting step. This keeps down the amount of calcium oxide remaining in the glass to be baked. As a result, it is possible to prevent the glass from being cracked and then being devitrified in the baking step.

A temperature for baking the glass in the baking step is preferably in a range of not less than 800°C and not more than 1200°C, and more preferably in a range of not less than 1000°C and not more than 1100°C. By limiting the baking temperature in the above-described ranges, it is possible to more surely cause the pores to disappear so as to obtain transparent glass.

As described above, in the manufacturing method of transparent glass of the present embodiment, at the melting step and the solidifying step, a glass which contains waste glass, silicon oxide, sodium oxide, and boron oxide is produced and then the glass is separated into the silicon oxide phase 1 and the sodium oxide-boron oxide phase 2 that contains a coloring component, calcium oxide, and the like; and, at the acidizing step, the glass is brought into contact with the acid solution. With this, it is possible to dissolve in the acid solution and remove components such as the metallic coloring component and calcium oxide, while retaining the glass form. Further, since the concentration of the calcium oxide in the glass to be acidized is reduced by using the silicon oxide and sodium oxide in the melting step, the calcium oxide can be almost completely removed in the acidizing step. In the baking step, by baking the glass from which the calcium oxide is almost completely removed, it is possible to cause the pores to disappear without changing the shape of the glass and without cracking the glass. With this, transparent glass is obtained.

Therefore with the manufacturing method of transparent glass of the present embodiment, it is possible to recycle waste glass, particularly colored waste glass, which now causes waste problems; and to manufacture transparent glass at low cost and conveniently.

Note that, in the foregoing manufacturing method, the glass obtained after the solidifying step may be further heat-treated. This heat treatment causes the phase separation of the glass to further proceed. Therefore the components such as the metallic coloring component can be more efficiently concentrated in the sodium oxide-boron oxide phase 2. As a result, it is possible to more efficiently remove the components such as the metallic coloring component from the glass in the later acidizing step. Therefore it is possible obtain transparent glass having higher purity and higher light transmittance.

A temperature for the heat treatment is preferably in a range of not less than 500 °C and not more than 700 °C, and more preferably in a range of not less than 570 °C and not more than 590 °C. By limiting the temperature for the heat treatment within the above-described ranges, the components such as the metallic coloring component in the glass can be efficiently concentrated in the sodium oxide-boron oxide phase 2, and then more surely removed from the glass in the later acidizing step. With this, it is possible to obtain transparent glass having higher purity and higher light transmittance.

Further, a time for the heat treatment in the heat treatment step may be appropriately set in accordance with the type and amount of the non-silicon oxide components in the colored waste glass, the melting temperature, and the like. But the time for the heat treatment in the heat treatment step is preferably not more than 100 hours, and more preferably not less than 24 hours and not more than 70 hours. If the time for the heat treatment is more than 100 hours, the phase separation further proceeds so as to further crystallize the silicon oxide and the other components. This may lower a desorption ratio of the non-silicon oxide components in the later acidizing step.

With the manufacturing method as explained earlier, it is possible to obtain transparent glass whose silicon oxide has high purity and whose light transmittance is high. Further, the transparent glass contains boron that results from the boron oxide material in the melting step, as a slight amount of, specifically not less than 10 ppm of, impurities.

### [EXAMPLES AND COMPARATIVE EXAMPLES]

With reference to Examples and Comparative Examples, the following will explain the present invention in more detail, but the present invention is not limited to Examples and Comparative Examples described below. Note that, in Examples and Comparative Examples, "parts" refers to "parts by weight", and "%" refers to "weight %."

### [EXAMPLE 7]

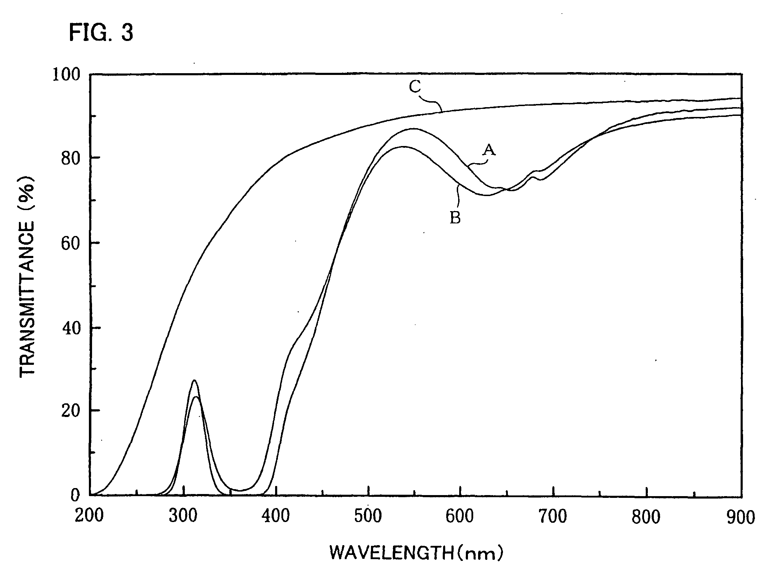

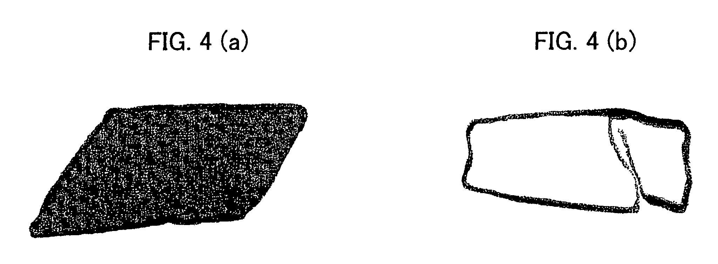

In the present Example, green colored soda-lime glass, which is colored waste glass shown in Figure 4(a) (sodium oxide (Na₂O): 15.2%, calcium oxide (CaO): 10.2%, silicon dioxide (SiO₂): 73.2%, aluminum oxide (Al₂O₃): 1.3%, and cobalt oxide (Cr₂O₃) as a coloring component: 0.1%), was used as the waste glass. A light absorption spectrum of the green colored soda-lime glass is indicated as the curve A in Figure 3.

100 parts of the green colored soda-lime glass, 75 parts of powder silicon oxide (SiO₂) (to be melted into 75 parts of silicon dioxide (SiO₂) when melted together with the soda-lime glass), 15 parts of sodium carbonate (Na₂CO₃) (to be melted into 8.8 parts of sodium oxide (Na₂O) when melted together with the soda-lime glass), 9.2 parts of aluminum hydroxide (Al(OH)₃) (to be melted into 6.0 parts of aluminum oxide (Al₂O₃) when melted together with the soda-lime glass), and 171 parts of boric acid (H₃BO₃) (to be melted into 95 parts of boron oxide (B₂O₃) when melted together with the soda-lime glass) were mixed together.

Next, the obtained mixture was heated for four hours under a temperature of 1400°C so as to be melted into a melted matter. The obtained melted matter was cooled and solidified so as to be formed in a plate shape into a glass plate. A light absorption spectrum of the glass plate is indicated by the curve B in Figure 3. The glass plate was then heat-treated for 40 hours at 580°C.

Next, 25 parts of 0.5 normal nitric acid solution as the acid solution was placed in a container. One part of the glass plate heat-treated as described above was then immersed in the nitric acid solution, heated to 90°C, and acidized for 24 hours at 90°C. Next, the nitric acid solution in the container was replaced with 25 parts of 1 normal nitric acid solution, and then the glass was heated and acidized again for 24 hours at 90°C.

After this, the glass was air-dried for a day, and baked for three hours at 1050°C. As a result, a transparent glass plate as shown in Figure 4(b) was obtained. A light absorption spectrum of the thus obtained transparent glass plate is indicated by the curve C in Figure 3.

Results shown in Figure 3 indicate that, with the method of the present invention, it is possible to remove a coloring component from colored waste glass so as to obtain transparent glass having high transmittance with respect to light in ultraviolet and visible light regions.

The transparent glass obtained in the present Example is mostly composed of only silicon oxide, and expected to contain about 95 weight % of silicon oxide. It is accordingly considered that the transparent glass obtained in the present Example can be used as quartz glass, though not high-purity.

### [EXAMPLE 8]

100 parts of commercially available green and blue mixed waste glass (mixed waste glass of commercially available liquor bottles), 75 parts of powder silicon oxide (SiO₂) (to be melted into 75 parts of silicon dioxide (SiO₂ when melted together with the soda-lime glass), 10.2 parts of sodium carbonate (Na₂CO₃) (to be melted into 6.0 parts of sodium oxide (Na₂O when melted together with the soda-lime glass), 9.2 parts of aluminum hydroxide (Al(OH)₃) (to be melted into 6.0 parts of aluminum oxide (Al₂O₃) when melted together with the soda-lime glass), and 153 parts of boric acid (H₃BO₃) (to be melted into 85 parts of boron oxide (B₂O₃) when melted together with the soda-lime glass) were mixed together.

Next, the obtained mixture was heated for four hours under a temperature of 1400°C so as to be melted into a melted matter. The obtained melted matter was cooled and solidified so as to be formed in a plate shape into a glass plate. The glass plate was then heat-treated for 24 hours at 585°C.

Next, 1 normal nitric acid solution as the acid solution was placed in a container. The glass plate that is heat-treated as described above was then immersed in the nitric acid solution, heated to 90°C, and acidized for 48 hours at 90°C.

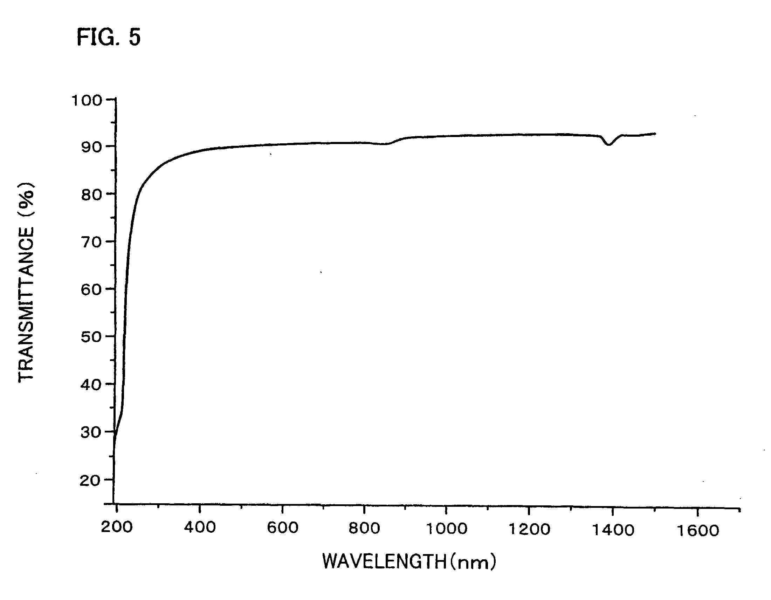

After this, the glass was air-dried for a day, and slowly heated for ten hours in a furnace in which carbon was placed to create a reduction atmosphere. In the baking, the temperature in the furnace was changed in stages. Specifically, the heating and baking was performed in such a condition that the temperature in the furnace takes 50°C for 2 hours, 120°C for 2 hours, 360°C for 1 hour, 650°C for 1 hour, 850°C for 1 hour, 950°C for 1 hour, and 1100°C for 2 hours sequentially from the start of the heating. Note that, the temperature in the furnace was promptly changed and changed so as not to exceed the predetermined temperatures. As a result, a transparent glass plate which transmits light whose wavelength is not more than 200 nm, like molten quartz, was obtained. Specifically, obtained was transparent glass plate which exhibits not less than 25% of transmittance with respect to light having a wavelength of 200 nm when a thickness of the transparent glass is 1 mm, more specifically, transparent glass plate which exhibits 30% of transmittance. A light absorption spectrum of the thus obtained transparent glass plate is shown in Figure 5.

Results shown in Figure 5 indicate that, with the method of the present invention, it is possible to remove a coloring component from colored waste glass so as to obtain transparent glass having very high transmittance with respect to light in ultraviolet and visible light regions. As described above, the transparent glass of the present Example has a light transmittance as high as that of quartz glass (molten quarts). The transparent glass of the present Example is therefore very useful as an optical material, such as a measurement cell and a substrate, which requires high light transmittance with respect to the ultraviolet region, for example, and can be also used as a substitute for quartz glass.

As a result of elemental analysis, the transparent glass obtained in the present Example contains 400 ppm of sodium (0.04%), 220 ppm of calcium (0.022%), 5280 ppm of boron (0.528%), 3400 ppm of aluminum (0.34%), not more than 10 ppm of chromium (0.0001%), 70 ppm of iron (0.007%), and not more than 10 ppm of copper (0.0001%).

### [COMPARATIVE EXAMPLE 5]

Except that the silicon oxide, the sodium carbonate, and the aluminum hydroxide were not used, and the amount of boric acid (H₃BO₃) was reduced to 72 parts (to be melted into 40 parts of boron oxide (B₂O₃) when melted together with the soda-lime glass), the glass plate was manufactured using a composition and operation similar to those in Examples.

As a result, the glass was cracked and, at the same time, devitrified in the baking step.

As described above, a manufacturing method of transparent glass of the present invention is arranged so as to include a melting step of heating and melting waste glass together with boron oxide material to be melted into boron oxide, silicon oxide, and sodium oxide material to be melted into sodium oxide; a solidifying step of solidifying into glass, a melted matter obtained in the melting step; an acidizing step of bringing the glass that is obtained in the solidifying step into contact with acid solution; and a baking step of baking the glass that is acidized in the acidizing step.

With this method, not only boron oxide but also silicon oxide and sodium oxide are added to the waste glass, and then the melted matter of the waste glass is solidified. This separates the glass into the silicon oxide phase and the phase composed of the other components, and also reduces a concentration of a metallic coloring component, calcium oxide, etc., in the glass. With this, it is possible to almost completely remove the metallic coloring component, the calcium oxide, etc., in the acidizing step, and to obtain transparent glass in the baking step without changing the shape of the glass and without cracking the glass.

Therefore, with the present invention, it is possible to recycle waste glass, particularly waste glass containing a metallic coloring component, which now causes waste problems; and to manufacture transparent glass at low cost and conveniently.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

### INDUSTRIAL APPLICABILITY

As described above, the recycling method of waste glass and manufacturing method of transparent glass of the present invention is useful as a method for recycling waste glass, particularly colored waste glass. Further the regenerated glass of the present invention is useful as cement aggregate, building block material, glass material, and the like, which are consumed in large quantities. Since the transparent glass of the present invention has high light transmittance, the transparent glass of the present invention is useful as a substitute for quartz glass used in an optical fiber, and the like.

## Claims

1. A recycling method of waste glass, comprising:
a pulverizing step of pulverizing waste glass into pulverized waste glass; and
an acidizing step of bringing said pulverized waste glass into contact with acid solution.

2. The recycling method of waste glass as set forth in claim 1, wherein:
each of grains of said pulverized waste glass has a diameter of not more than 100 µm.

3. A recycling method of waste glass, comprising:
a boron oxide-containing waste glass melting step of heating and melting boron oxide-containing waste glass which contains (A) boron oxide material to be melted into boron oxide and (B) waste glass;
a pulverizing step of solidifying and pulverizing into pulverized waste glass, the boron oxide-containing waste glass that is melted in the boron oxide-containing waste glass melting step; and
an acidizing step of bringing said pulverized waste glass into contact with acid solution.

4. A recycling method of waste glass, comprising:
a phosphorus oxide-containing waste glass melting step of heating and melting phosphorus oxide-containing waste glass which contains (A) phosphorus oxide material to be melted into phosphorus oxide and (B) waste glass;
a pulverizing step of solidifying and pulverizing into pulverized waste glass, the phosphorus oxide-containing waste glass that is melted in the phosphorus oxide-containing waste glass melting step; and
an acidizing step of bringing said pulverized waste glass into contact with acid solution.

5. The recycling method of waste glass as set forth in one of claims 1 through 4, wherein:
a temperature of the acid solution in the acidizing step is in a range of not less than 50°C and not more than 200 °C.

6. The recycling method of waste glass as set forth in one of claims 1 through 4, wherein:
a concentration of the acid solution in the acidizing step is in a range of not less than 0.1 normal and not more than 4 normal.

7. A regenerated glass manufactured by the recycling method of waste glass as set forth in one of claims 1 through 4.

8. A cement aggregate manufactured by the recycling method of waste glass as set forth in one of claims 1 through 4.

9. A regenerated glass manufactured from waste glass, containing not less than 10 ppm of boron or phosphorus.

10. The regenerated glass as set forth in claim 9, further containing not less than 99 weight % of silica.

11. The regenerated glass as set forth in claim 9 or 10, having a surface area of not less than 10 m²/g.

12. A manufacturing method of transparent glass, comprising:
a melting step of heating and melting waste glass together with boron oxide material to be melted into boron oxide, silicon oxide, and sodium oxide material to be melted into sodium oxide;
a solidifying step of solidifying into glass, a melted matter obtained in the melting step;
an acidizing step of bringing said glass that is obtained in the solidifying step into contact with acid solution; and
a baking step of baking said glass that is acidized in the acidizing step.

13. The manufacturing method of transparent glass as set forth in claim 12, wherein:
a melting temperature in the melting step is in a range of not less than 1350 °C and not more than 1450°C.

14. The manufacturing method of transparent glass as set forth in claim 12, wherein:
the acidizing step is repeated in a plurality of times by replacing the acid solution.

15. The manufacturing method of transparent glass as set forth in claim 12, wherein:
a temperature for baking said glass in the baking step is in a range of not less than 800°C and not more than 1200°C.

16. The manufacturing method as set forth in claim 12, wherein:
in the melting step, the waste glass is heated and melted together with the boron oxide material to be melted into boron oxide, the silicon oxide, the sodium oxide material to be melted into sodium oxide, and aluminum oxide material to be melted into aluminum oxide.

17. The manufacturing method of transparent glass as set forth in claim 16, wherein:
in the melting step, the boron oxide material to be melted into not less than 40 parts by weight and not more than 100 parts by weight of the boron oxide, the silicon oxide to be melted into not less than 30 parts by weight and not more than 150 parts by weight of silicon oxide, the sodium oxide material to be melted into not less than 4 parts by weight and not more than 20 parts by weight of the sodium oxide, and the aluminum oxide material to be melted into not less than 4 parts by weight and not more than 8 parts by weight of the aluminum oxide are placed with respect to 100 parts by weight of the waste glass so as to be heated and melted together.

18. The manufacturing method of transparent glass as set forth in one of claims 12 through 17, further comprising:
a heat treatment step of heat-treating said glass after the solidifying step.

19. The manufacturing method of transparent glass as set forth in claim 18, wherein:
a temperature for heat-treating said glass in the heat treatment step is in a range of not less than 500°C and not more than 700°C.

20. A transparent glass manufactured by the manufacturing method as set forth in one of claims 12 through 19.

21. A transparent glass containing not less than 10 ppm of boron,
said transparent glass having a transmittance of not less than 40% with respect to 300 nm, when a thickness of said transparent glass is 1 mm.

22. The transparent glass as set forth in claim 21, having a transmittance of not less than 25% with respect to 200 nm, when the thickness of said transparent glass is 1 mm.
